## Europäisches Patentamt
## European Patent Office
## Office européen des brevets

(19)

(11) Veröffentlichungsnummer: **0 156 937**
A1

(12) # EUROPÄISCHE PATENTANMELDUNG

(21) Anmeldenummer: **84103650.2**

(22) Anmeldetag: **03.04.84**

(51) Int. Cl.⁴: **B 01 D  1/30,** B 01 D  3/10, B 01 L  9/00

(43) Veröffentlichungstag der Anmeldung: **09.10.85** **Patentblatt 85/41**

(71) Anmelder: **Heidolph-Elektro GmbH & Co. KG, Starenstrasse 23, D-8420 Kelheim/Donau (DE)**

(72) Erfinder: **Vollgold, Günter, Veit-Stoss-Strasse 10, D-8540 Schwabach (DE)**

(84) Benannte Vertragsstaaten: **AT BE CH DE FR GB IT LI LU NL SE**

(74) Vertreter: **Göbel, Matthias, Dipl.-Ing., Pruppacher Hauptstrasse 5-7, D-8501 Pyrbaum-Pruppach (DE)**

(54) Vorrichtung zum höhenveränderlichen Halten von Vakuumverdampfern.

(57)    Bei einer Vorrichtung zum höhenveränderlichen Halten von Vakuumverdampfern (1) oberhalb einer Aufstellplatte (3) od. dgl. ist zur Schaffung von Maßnahmen zur stabilen höhenveränderlichen und automatisierfähigen Halterung des Vakuumverdampfers, der Vakuumverdampfer (1) durch einen mit der Aufstellplatte (3) mittel- oder unmittelbar verbundenen Schwenkhebel (5) getragen, der elektromechanisch oder pneumatisch bzw. hydraulisch zwischen zwei Endstellungen in beiden Schwenkrichtungen verschwenkbar und in den Schwenkstellungen fixierbar ist.

EP 0 156 937 A1

**DIPL.-ING. M. GÖBEL**
**PATENTANWALT**
ZUGELASSENER VERTRETER
BEIM EUROPÄISCHEN PATENTAMT

8501 PYRBAUM-PRUPPACH
PRUPPACHER HAUPTSTRASSE 5-7
TELEFON 09180/675
TELEGRAMM GOEPATENT PYRBAUM
TELEX 624407 GOEPA

BANKKONTEN:
VOLKSBANK NÜRNBERG 45233 BLZ 760900 00
COMMERZBANK NÜRNBERG 8300907 BLZ 760400 61

0156937

— 1 —

Heidolph-Elektro GmbH & Co KG, D 8420 Kelheim/Donau


Vorrichtung zum höhenveränderlichen Halten von Vakuumverdampfern


Die Erfindung betrifft eine Vorrichtung zum höhenveränderlichen Halten von Vakuumverdampfern oberhalb einer Aufstellplatte od.dgl.

Es ist bekannt, Vakuumverdampfer mittels Stativen oberhalb eines die Wärmequelle bildenden Wasserbades zu halten und durch manuelle Handhabungen in der Senkrechten zu
verstellen. Diese Art der Höhenveränderungen erweisen sich
als umständlich und sind nicht automatisierbar. Weiter ist
es bekannt, Vakuumverdampfer mittels einer, insbesondere motorisch getriebenen Gewindespindel mit Gradführung zu halten und durch Drehen der Gewindespindel in der Vertikalen
zu verstellen. Die Gewindespindel ermöglicht jedoch nur instabile Halterungen.

Es ist Aufgabe der Erfindung, Maßnahmen zur stabilen höhenveränderlichen Halterung von Vakuumverdampfern zu schaffen,
die auch automatisierbar sind.

Erfindungsgemäß ist diese Aufgabe dadurch gelöst, daß der
Vakuumverdampfer an einem mit der Aufstellplatte mittel-

0156937

- 2 -

oder unmittelbar verbundenen Schwenkhebel getragen ist,
der elektromechanisch oder pneumatisch, bzw. hydraulisch
zwischen zwei Endstellungen in beiden Schwenkrichtungen
verschwenkbar und in den Schwenkstellungen fixierbar ist.
Der Schwenkhebel kann dabei beliebig kontinuierlich oder
periodisch in beiden Schwenkrichtungen bewegbar und als
ein- oder zweiarmiger Hebelarm ausgebildet sein. Der wahlweise manuell oder motorisch getriebene Schwenkhebel erbringt eine wackelfreie Halterung des Vakuumverdampfers
in allen Höhenverstellungen und erlaubt gleichermaßen
Grob- bzw. Feinverstellungen zu exakt definiertem Einnehmen vorbestimmter Eintauchtiefen des Kolbens in das
Wasserbad. Die so geschaffene Halterung gibt damit die
Voraussetzung zu exakten Dosierungen der dem Kolben des
Vakuumverdampfers zuzuführenden Wärmemengen. Gleichzeitig
sind die Schwenkbewegungen automatisierbar. Hierzu kann
bevorzugt eine Führungsgröße, z.B. der Unterdruck oder
die Siedetemperatur im Kolben zur Steuerung der Schwenkvorgänge genutzt werden.

In Ausgestaltung der Vorrichtung ist vorgesehen, daß der
Schwenkhebel über ein mit einem Motorritzel kämmendes Getriebeelement, das mit dem Schwenkhebel fest oder verstellbar fest verbunden ist, verschwenkbar ist. Als Getriebeelement kann z.B. ein Zahnsegment dienen. Ferner ist vorgesehen,
daß der Schwenkhebel mittels einer Gewindespindel verschwenkbar ist, die am Schwenkhebel zwischen dem Schwenkhebelgelenk
und dem Vakuumverdampfer bzw. dem dem Vakuumverdampfer abgewandten Arm des Schwenkhebels angreift. Darüber hinaus erlaubt die Anordnung des Schwenkhebels auch den Antrieb durch
einen in einem Zylinder durch ein Druckmedium verschieblichen
Kolben, wobei der Kolben an beliebiger Stelle am Schwenkhebel
angreifen kann.

Schließlich sieht die Erfindung noch Maßnahmen zum vom Antrieb unabhängigen Betätigen des Schwenkhebels und Herausheben des Kolbens aus dem Wasserbad, z. B. bei Stromausfall dadurch vor, daß der Schwenkhebel mit einem gleichachsig verschwenkbaren Zwischenglied in Verbindung steht, das unmittelbar oder mittelbar, z. B. über ein entkuppelbares Getriebeelement elektromechanisch, pneumatisch oder hydraulisch antreibbar ist. Als Zwischenglied ist vorteilhaft ein Hebelarm geeignet, der sich über eine Teillänge des Schwenkhebels erstreckt und als Kuppelglied einen in Ausnehmungen des Getriebeelements einbringbaren Stift aufweist. Von Vorteil hat sich noch gezeigt, wenn der Schwenkhebel durch ein zwischen diesem und der Trägerplatte od.dgl. angeordnetes Federglied, z.B. eine Schraubenfeder oder eine Gasdruckfeder abgestützt ist. Abgesehen davon, daß die Vorspannung des Federglieds zur Gewichtsentlastung beiträgt, kann es bei entsprechender Ausbildung nach Entriegelung von Antrieb und Schwenkhebel zum selbsttätigen Hochfahren des Schwenkhebels genutzt werden.

Weiter sind noch Maßnahmen zum Erkennen oder Bestimmen der Abschwenkungen des Schwenkhebels durch die Anordnung eines Winkelgebers vorgesehen. Die Abschwenkungen sind auch insbesondere für Automatisierungsvorgänge vermittels eines Drehwiderstandes oder durch Impulsscheiben optoelektrisch oder induktiv zu erkennen bzw. zu bestimmen.

Es entspricht der Erfindung, daß die Länge oder die Formgestaltung des Schwenkhebels beliebig gewählt sein kann und daß durch die Verwendung entsprechender Schwenkhebel beliebig große Schwenkwege erzielbar sind.

0156937

- 4 -

Die Erfindung ist in der Zeichnung verdeutlicht.
Hierin bedeuten:

Figur 1     einen Vakuumverdampfer mit einer Vorrichtung
            in Seitenansicht,
Figur 2     ein Teilstück einer Vorrichtung in Seitenansicht,
Figur 3     ein Teilstück einer Vorrichtung gemäß anderer
            Ausbildung in Seitenansicht,
Figur 4     ein weiteres Teilstück einer Vorrichtung in
            Seitenansicht,
Figur 5     ein Teilstück einer Vorrichtung gemäß Figur 2
            mit einem Weggeber in Seitenansicht,
Figur 6     ein Teilstück einer Vorrichtung der Figur 5
            in Rückansicht,
Figur 7     ein Teilstück einer Vorrichtung in abgewandelter Ausbildung in Seitenansicht und
Figur 8     ein Teilstück einer Vorrichtung der Figur 7
            in Rückansicht.

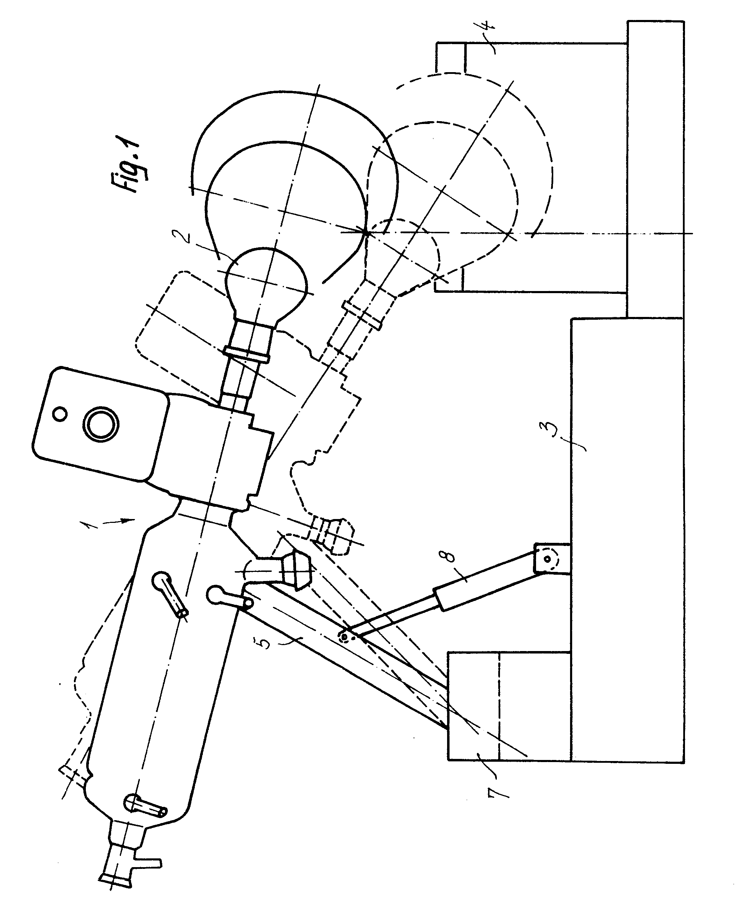

In Fig. 1 ist mit 1 ein Vakuumverdampfer mit an sich bekannter Ausbildung bezeichnet, dessen Kolben 2 zum Zwecke
der Zuführung von Wärme in ebenfalls bekannter Weise in
einem auf einer Aufstellplatte 3 od.dgl. aufgebrachtes bzw.
daneben aufgestelltes Wasserbad 4 mit vorbestimmten Tiefen
eintauchbar oder aus diesem heraushebbar ist. Erfindungsgemäß ist der Vakuumverdampfer 1 durch einen Schwenkhebel 5
getragen, der mit seinem dem Vakuumverdampfer 1 abgewandten
Ende entweder an einer Aufstellplatte 3 oder einem mit der
Aufstellplatte verbundenen Gehäuse 7 eines Antriebs angelenkt
ist. Durch Verschwenken des Schwenkhebels 5 ist der Vakuum-

- 5 -

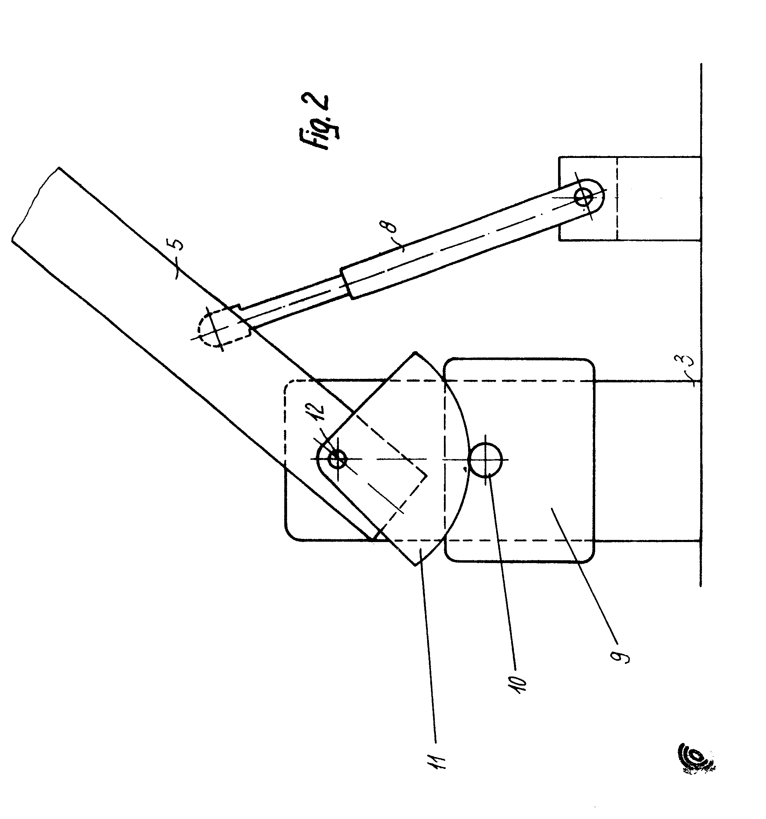

verdampfer 1 zwischen zwei Endstellungen, z.B. der voll gezeichneten Aushebestellung und der gestrichelt dargestellten Eintauchstellung beliebig stellbar, so daß durch verschieden weites Eintauchen des Kolbens 2 in das Wasserbad 4 dem Vakuumverdampfer verschieden große Wärmemengen zugeführt werden können bzw. die Zuführung von Wärme unterbrochen ist. In den Fig. 1 und 2 ist der Schwenkhebel 5 als einarmiger Hebel ausgeführt und durch eine zwischen diesem und der Aufstellplatte 6 angeordnete Gasdruckfeder 8 gewichtsentlastet. Als Antrieb für den Schwenkhebel 5, kann, wie insbesondere in Fig. 2 erkennbar, ein Getriebemotor 9 dienen, dessen Ritzel 10 mit einem Zahnsegment 11 kämmt, das auf der Welle 12 des Schwenkhebels 5 fest aufgebracht ist. Durch Drehen des Ritzels 10 ist das Zahnsegment 11 in der einen oder anderen Richtung drehbar und der Schwenk- hebel 5 im Uhrzeigerdrehsinn oder entgegen dem Uhrzeiger- drehsinn verschwenkbar.

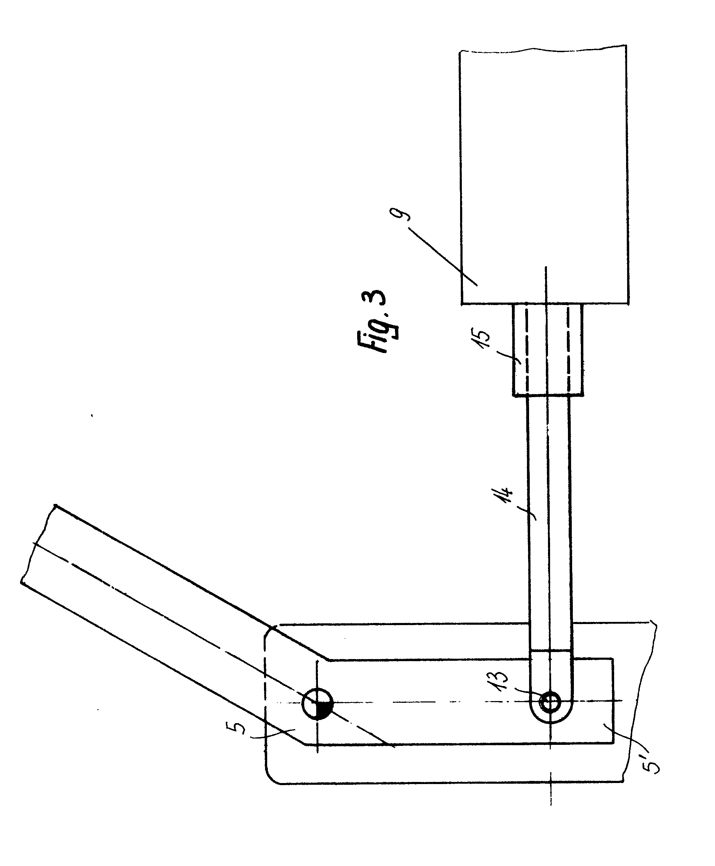

Beim Ausführungsbeispiel der Fig. 3 ist der Schwenkhebel 5 abweichend als zweiarmiger Hebelarm ausgeführt. An dem dem Vakuumverdampfer 1 abgewandten Hebelarm 5' greift bei 13 eine als Antrieb dienende Spindel 14 eines Getriebemotors 9 an, der durch Drehen einer Gewindehülse 15 Abschwenkungen des Schwenkhebels 5 bewirkt. Es versteht sich, daß anstelle der Gewindespindel auch der Kolben eines hydraulischen oder pneumatischen Zylinders zu Verschwenkungen angreifen kann.

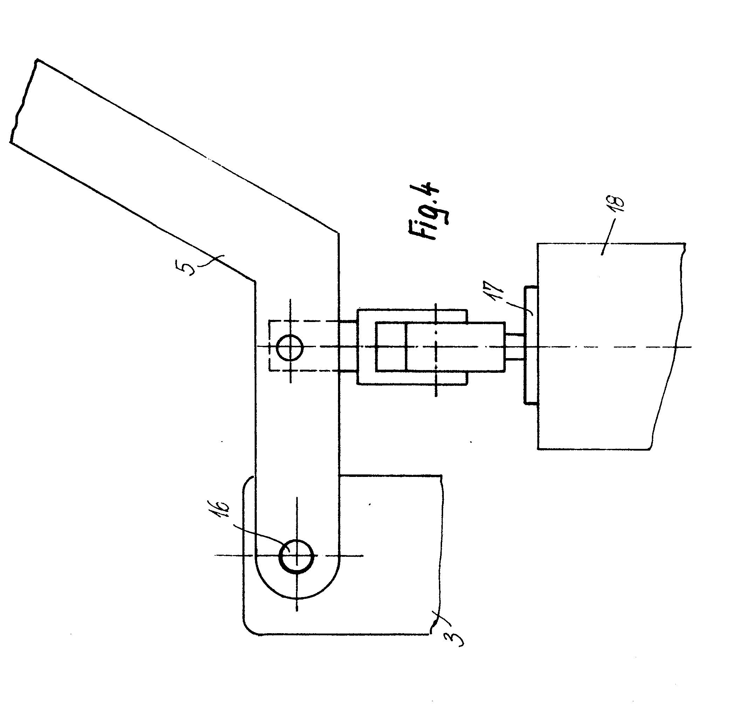

Der bei 16 gelagerte einarmige Schwenkhebel 5 gemäß der Figur 4 ist durch den Kolben 17 eines pneumatischen oder hydraulischen Zylinders 18 verschwenkbar. Es versteht sich,

- 6 -

daß der Schwenkhebel 5 auch durch die Spindel 14 eines Getriebemotors 9 verschwenkbar ist.

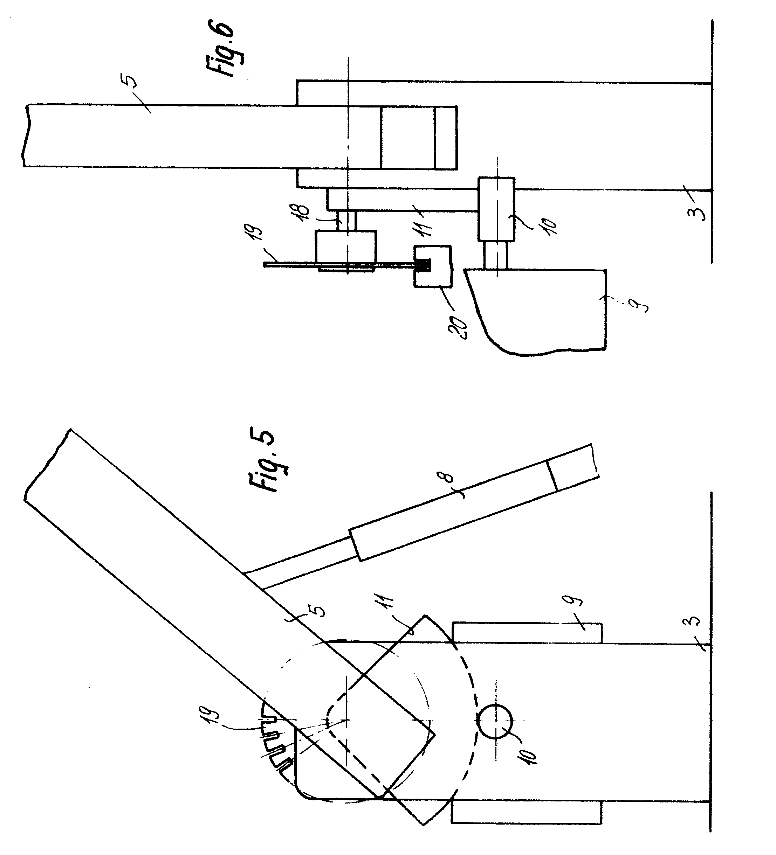

Beim Ausführungsbeispiel der Fig. 5 und 6 ist auf der Welle 18 von Zahnsegment 11 und Schwenkhebel 5 eine als Weggeber dienende Schlitzscheibe 19 angeordnet, die das Erkennen und Bestimmen von Abschwenkungen ermöglicht. Anstelle der Schlitzscheibe kann auch ein Potentiometer (nicht gezeigt) zur elektrischen bzw. elektronischen Wegbegrenzung verwendet werden. Die Schlitzscheibe 19 arbeitet hierzu mit einer Auswerteeinrichtung 20 zusammen.

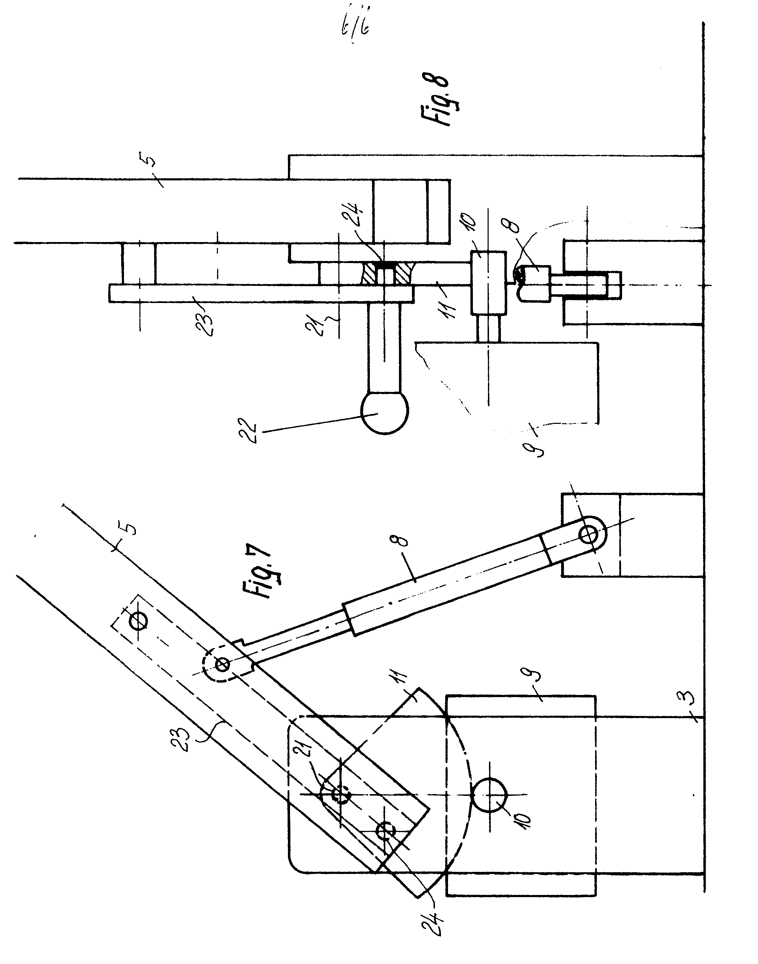

Bei der Vorrichtung der Fig. 7 und 8 sind die Schwenkhebel 5 über Zahnsegmente 11 durch Motorritzel 10 verschwenkbar. Die Zahnsegmente 11 sind hierzu drehbeweglich auf den Achsen 21 des Schwenkhebels 5 angebracht und über Mitnehmer 22 mit einem gleichachsig mit dem Schwenkhebel verschwenkbaren und mit diesem verbundenen Hebelarm 23 kuppelbar. Die Kupplungen erfolgen durch Einbringen des Mitnehmers 22 in Ausnehmungen 24 in den Zahnsegmenten 11, während zur Trennung der Antriebe und Schwenkhebel die Mitnehmer 22 aus den Ausnehmungen 24 auszuheben sind. Die Schwenkhebel 5 sind danach unabhängig von den Antrieben verschwenkbar, um so gegebenenfalls, z.B. bei einem Stromausfall Abschwenkungen des Vakuumverdampfers 1 zum Herausheben des Kolbens 2 aus dem Wasserbad 4 zu bewirken.

0156937

- 1 -

Patentansprüche:

1. Vorrichtung zum höhenveränderlichen Halten von Vakuumverdampfern oberhalb einer Aufstellplatte od. dgl., dadurch gekennzeichnet, daß der Vakuumverdampfer (1) durch einen mit der Aufstellplatte (3) mittel- oder unmittelbar verbundenen Schwenkhebel (5) getragen ist, der elektromechanisch oder pneumatisch bzw. hydraulisch zwischen zwei Endstellungen in beiden Schwenkrichtungen verschwenkbar und in den Schwenkstellungen fixierbar ist.

2. Vorrichtung nach Anspruch 1, dadurch gekennzeichnet, daß der Schwenkhebel (5) kontinuierlich in beiden Schwenkrichtungen verschwenkbar ist.

3. Vorrichtung nach Anspruch 1, dadurch gekennzeichnet, daß der Schwenkhebel (5) periodisch in beiden Schwenkrichtungen verschwenkbar ist.

4. Vorrichtung nach Anspruch 1, dadurch gekennzeichnet, daß der Schwenkhebel (5) als ein- oder zweiarmiger Hebel ausgebildet ist.

5. Vorrichtung nach Anspruch 1, dadurch gekennzeichnet, daß die Schwenkbewegungen des Schwenkhebels (5) durch eine Führungsgröße, z.B. dem Unterdruck oder der Siedetemperatur im Kolben (2) steuerbar sind.

6. Vorrichtung nach Anspruch 1 und 5, dadurch gekennzeichnet, daß der Schwenkhebel (5) über ein mit einem Motorritzel (10) kämmendes Getriebeelement, das mit dem Schwenkhebel (5) fest oder verstellbar verbunden ist, verschwenkbar ist.

0156937

- 2 -

7. Vorrichtung nach Anspruch 6, dadurch gekennzeichnet, daß das Getriebeelement durch ein Zahnsegment (11) gebildet ist.

8. Vorrichtung nach Anspruch 1, 4 und 5, dadurch gekennzeichnet, daß der Schwenkhebel (5) mittels einer Gewindespindel (12) verschwenkbar ist, die am Schwenkhebel zwischen Schwenkhebelgelenk und Vakuumverdampfer bzw. dem dem Vakuumverdampfer abgewandten Arm (5') des Schwenkhebels (5) angreift.

9. Vorrichtung nach Anspruch 1, dadurch gekennzeichnet, daß der Schwenkhebel (5) durch einen in einem Zylinder (18) durch ein Druckmedium verschieblich ausgebildeten Kolben (17) verschwenkbar ist.

10. Vorrichtung nach Anspruch 1, 6, 7, 8 und 9, dadurch gekennzeichnet, daß der Schwenkhebel (5) mit einem gleichachsig verschwenkbaren Zwischenglied verbunden ist, das mit einem Getriebeelement kuppelbar und durch dieses elektromechanisch, pneumatisch oder hydraulisch verschwenkbar ist.

11. Vorrichtung nach Anspruch 1, dadurch gekennzeichnet, daß der Schwenkhebel (5) durch ein zwischen diesem und der Aufstellplatte (3) angeordnetes Federglied (8) abgestützt ist.

12. Vorrichtung nach Anspruch 1, dadurch gekennzeichnet, daß die Abschwenkungen des Schwenkhebels (5) durch einen Winkelgeber (19) erkennbar bzw. bestimmbar sind.

0156937

- 3 -

13. Vorrichtung nach Anspruch 1, dadurch gekennzeichnet, daß die Abschwenkungen des Schwenkhebels (5) vermittels eine Drehwiderstandes oder durch Impulsscheiben
optoelektrisch oder induktiv erkenn- bzw. bestimmbar sind.

Fig.1

0156937

2/6

Fig. 2

5

8

12

11

10

9

3

Fig. 3

Fig.4

5

16

17

18

3

5/6

**Fig.6**

**Fig.5**

Fig. 7

Fig. 8

0156937

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | GB-A-2 129 321  (YAMATO SCIENTIFIC)<br>* Seite 1, Zeilen 68-80; Figur 1 * | 1 | B 01 D  .1/30<br>B 01 D  3/10<br>B 01 L  9/00 |
| Y | US-A-3 525 382  (G.C. DENOL)<br>* Figur 1; Spalte 3, Zeilen 10-24,55-75 * | 1 | |
| A | | 2-4,9 13 | |
| A | FR-A- 745 052  (R. WOLTER)<br>* Seite 3, Zeile 88 - Seite 5, Zeile 46; Figuren * | 1 | |
| A | DE-C- 207 356  (S. HUDIG) | | |

RECHERCHIERTE SACHGEBIETE (Int. Cl.4)

B 01 L
B 01 D

Der vorliegende Recherchenbericht wurde für alle Patentansprüche erstellt.

| Recherchenort DEN HAAG | Abschlußdatum der Recherche 06-12-1984 | Prüfer VAN BELLEGHEM W.R. |
|---|---|---|